# EUROPEAN PATENT APPLICATION

(11) **EP 0 632 361 A2**
(43) Date of publication of application: **04.01.1995**
(21) Application number: 94110001.8
(22) Date of filing: 28.06.1994
(51) Int. Cl.: G06F 3/023

(54) **Multilingual keyboard configuration and code page switching**

(30) Priority: 01.07.1993 US 86693
(71) Applicant: MICROSOFT CORPORATION, Redmond, Washington 98052-6399 (US)
(72) Inventor: Silver, David Michael, Bellevue, Washington 98007 (US); Windsor, John R., Redmond, Washington 98053 (US)
(74) Representative: Grünecker, Kinkeldey, Stockmair & Schwanhäusser Anwaltssozietät

(57) **Abstract**

An operating system provides facilities for switching of keyboard configurations and code pages. The operating system allows application programs run on it to change their keyboard configurations and code pages without interrupting execution of the application program. Visual user interface elements are provided within the window of the application program by the operating system to allow a user to change the keyboard. The keyboard languages associated with the user interface visual elements may be switched by the user. As a result, the user has access to a multitude of different keyboard languages and code pages.

## Description

### Technical Field

This invention relates generally to data processing systems, and more particularly, to switching of keyboard configurations and code pages to support multilingual keyboard input to a data processing system.

### Background of the Invention

When a user seeks to enter character data to a data processing system by way of keyboard, the user depresses and releases keys of the keyboard. The depression of the keys of the keyboard generates scan codes. The interpretation of the scanned codes is dependent upon a current keyboard configuration and a current code page. The code page is a set of characters that constitute a superset of possible characters that may be input using the keyboard. The keyboard configuration specifies a mapping of the scanned codes to a subset of the characters available in the code page. Typically, a code page includes 256 characters, whereas the keyboard configuration may map to only approximately half of these characters. Many natural languages include characters that are shared with other natural languages. Many natural languages use an alphabet that differs only by a few unique characters from the alphabet used by another natural language. As such, a single code page may include all of the characters necessary for a number of different languages. The characters required by a particular natural language are defined by the keyboard configuration for the natural language. The keyboard configuration maps the scanned codes to a subset of the code page that constitutes that alphabet used for the natural language.

Most current software programs restrict a user to character input in a single natural language. Nevertheless, certain operating systems, such as the Microsoft Windows, version 3.1, operating system, sold by Microsoft Corporation of Redmond, Washington, allow a user to select a keyboard configuration at the system level. The operating system provides an interface at the system level to allow a user to choose a desired keyboard configuration for implementing the natural language of their choice. In many cases, such keyboard configurations may not be changed for an application program without interrupting execution of an application program. In other cases, the keyboard change may be made, but the application program does not comprehend the keyboard change. The keyboard is typically selected before the application begins executing.

All of the available keycode configurations in such an operating system are associated with a single code page of characters. The operating system provides a number of different keyboard drivers that each implement the keyboard configuration for a given natural language. Only one of the keyboard drivers is loaded in internal memory at any point in time. When a keyboard configuration is switched, the new keyboard driver must be loaded from disk into internal memory. As a result of the above-discussed limitations, it is very difficult for a user to enter character input data in certain languages and it is also very difficult to include character input data having multiple languages in a single input document.

### Summary of the Invention

In accordance with a first aspect of the present invention, a method is practiced in a data processing system having a video display and a processing means for executing a program on an operating system. The data processing system also include a keyboard with keys that generate codes when depressed and memory means for storing a first code page of characters and a second code page of characters. In this method, a first code page is used during the execution of the program on the processing means to interpret codes generated in response to depression of the keys of the keyboard. Initially, codes generated in response to depression of keys of the keyboard are interpreted as characters from the first code page. The code page is then switched to a second code page without interrupting execution of the program on the processing means. Once the switch has been completed, codes generated in response to depression of keys on the keyboard are interpreted as characters from the second code page. The first code page may use a first font, and when the active code page is switched to the second code page, the font that is used is switched to a second font.

In accordance with another aspect of the present invention, a first code page of characters is stored in the memory along with a second code page of characters. While the program is run on the processing means, a key code is generated in response to a user depressing a key on the keyboard. The key code is interpreted as a character in the first code page. The code page used by the program is switched to the second code page of characters. Another key code is generated in response to the user depressing another key on the keyboard. This additional key code is interpreted as a character of the second code page.

In accordance with the further aspect of the present invention, a method is practiced wherein during execution of the application program on the processing means, a first keyboard configuration is used for mapping keystrokes entered on the keyboard to character input. The keyboard configuration is switched to a second keyboard configuration for mapping keystrokes entered on the keyboard to character input. The switching occurs without interruption of execution of the application program.

In accordance with a still further aspect of the present invention, a code page of characters is stored in the memory means. A keyboard configuration is also stored in the memory means for each of a plurality of associated natural languages. Each keyboard configuration matches key codes produced when a key on the keyboard is depressed with corresponding characters in the code page for the associated natural language. A visual element is displayed on the visual display that allows a user to select one of the keyboard configurations during execution of the program on the processing means. In response to selection of a keyboard layout by the user via the visual element, the selected keyboard layout is used to match key codes with characters in the code page.

In accordance with yet another aspect of the present invention, code pages of characters are stored in the memory means. For each code page stored in the memory means, at least one keyboard configuration is stored. Each keyboard configuration specifies a mapping of key codes generated in response to depression of keys in the keyboard to characters of a different natural language in the code page. During execution of the program in the processing means, a first visual element is displayed on the video display. The first visual element may be activated by a user to choose one of the keyboard configurations among those stored for a first code page. The second visual element is also displayed on the video display during execution of the program in the processing means. The second visual element may be activated by the user to choose one of the keyboard configurations stored for the code pages other than the first code page. One of the keyboard configurations is selected in response to activation of one of the first and second visual elements. The selected keyboard configuration is used by the program in mapping key codes to characters.

### Brief Description of the Drawings

Figure 1 is a block diagram of a data processing system suitable for practicing a preferred embodiment of the present invention.

Figure 2 is an illustration of an ANSI codebook used in the preferred embodiment of the present invention.

Figure 3 is a flow chart illustrating the steps performed to select a keyboard and code page in the preferred embodiment of the present invention.

Figure 4 is an illustration of a window containing pushbuttons for selecting a keyboard configuration and code page in the preferred embodiment of the present invention.

Figure 5 is a table illustrating natural languages and their associated abbreviations for which keyboard configurations are provided in the preferred embodiment of the present invention.

Figure 6 is a flow chart illustrating the steps performed by the preferred embodiment of the present invention to change a current configuration associated with the pushbutton.

Figure 7 is an illustration of a table used by the preferred embodiment of the present invention to associate keyboard configurations with code pages.

Figure 8 is a flow chart illustrating how scan codes are converted to input character data used by an application program in the preferred embodiment of the present invention.

### Detailed Description of the Invention

The preferred embodiment of the present invention allows a user to change the language of the keyboard that he is using (i.e., switch keyboard configuration) as well as the code page that he is using. The switching of the keyboard configurations and code pages is performed by an operating system. This ability to switch keyboard configurations and code pages allows a user to choose any of a number of different languages for character input data that is entered via a keyboard. As a result, a document generated using the keyboard may include characters from different natural languages.

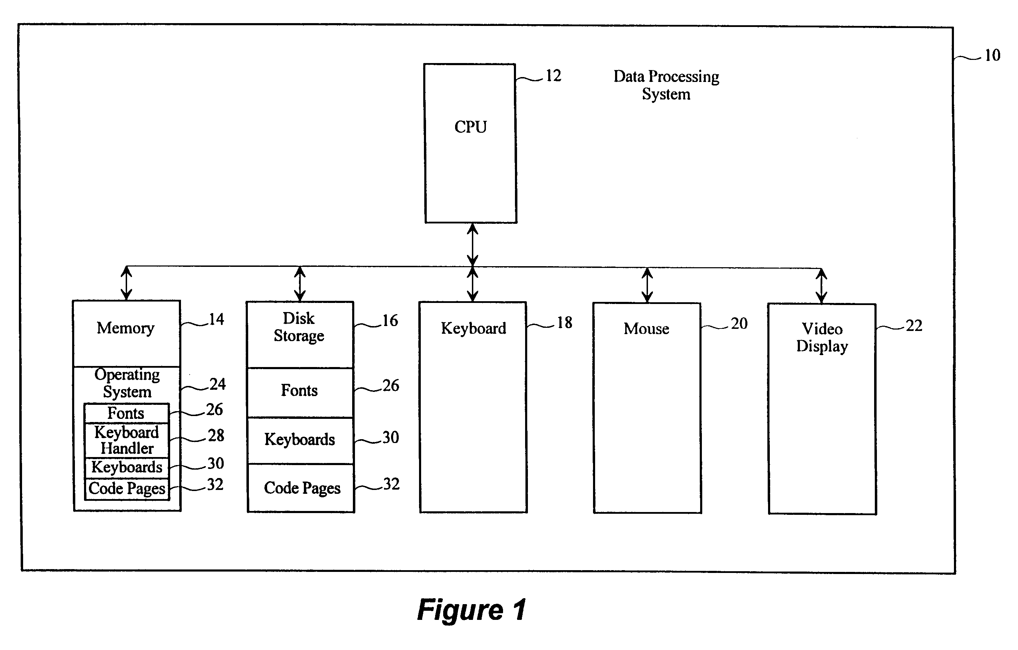

Figure 1 is a block diagram of a data processing system for practicing the preferred embodiment of the present invention. The data processing system 10 includes a central processing unit (CPU) 12. The CPU 12 has access to a memory 14 and disk storage 16. The memory 14 holds an operating system 24. The operating system 24 includes a set of fonts 26, a keyboard handler 28, a plurality of keyboard configurations 30, and a set of code pages 32. The fonts 26, the keyboards 30, and the code pages 32 are loaded into memory 14 from disk storage 16 by the operating system 24. The data processing system also includes keyboard 18, a two-button mouse 20 (moving left and right buttons), and a video display 22. The keyboard handler 28 is responsible for properly converting scan codes received from the keyboard 18 into character codes. Codes were used discussed briefly in the Background of the Invention.

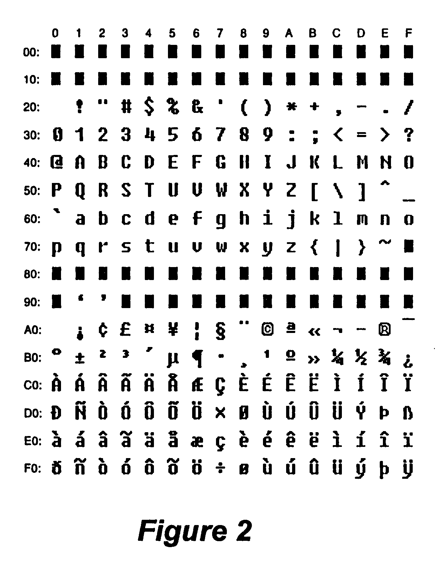

Figure 2 shows an example of the ANSI code page. The characters included in such a code page are used in interpreting keystrokes entered from the keyboard 18. The keyboard 18 includes a number of keys that when depressed generate character input. As mentioned above, when certain ones of the keys of the keyboard 18 are depressed, scan codes are generated that are mapped to characters within the code pages 32. The mapping associates the scanned code with a particular character code in the code pages 32. As such, depression of the associated key is interpreted as entering the character to which the scan code is mapped. Moreover, many natural languages utilize shared characters as well as additional characters that are unique to a language. As a result, multiple keyboard configurations map into a single code page. The keyboard configurations 30 specify the mapping to characters from the scan codes generated by the keyboard 18.

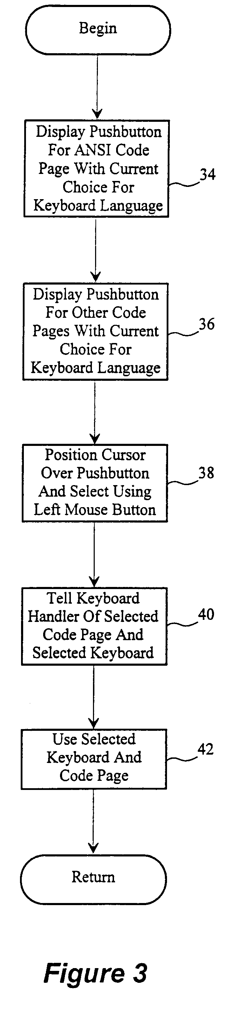

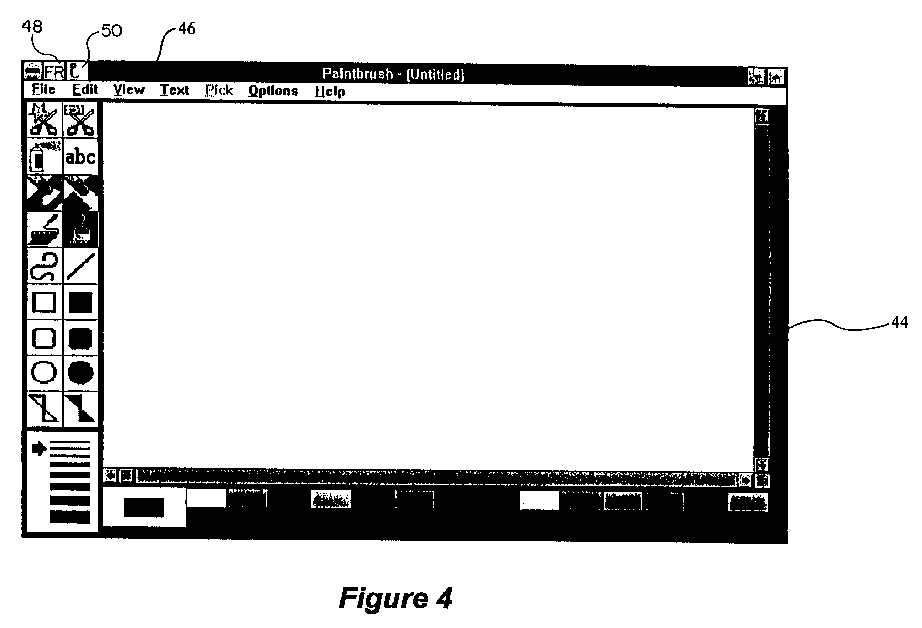

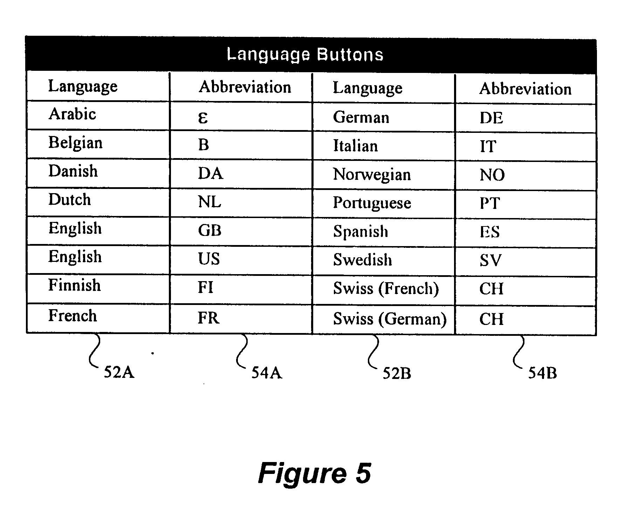

Figure 3 is a flow chart illustrating the steps performed in the preferred embodiment of the present invention to provide keyboard configuration switching and code page switching. The flow chart of Figure 3 will be described in conjunction with Figure 4. A pushbutton 48 is displayed on the video display 22. This pushbutton 48 is associated with the ANSI code page and displays an abbreviation of the current keyboard configuration for the ANSI code page (step 34 in Figure 3). A pushbutton 50 (Figure 4) is also displayed on the video display 22 which is associated with the other code pages available in the system 10 (step 36). The pushbutton 50 also displays an abbreviation for the current keyboard configuration. In particular, as shown in Figure 4, pushbutton 48 displays the abbreviation "FR" specifying that the French keyboard configuration is the current keyboard configuration that maps to the ANSI code page, whereas pushbutton 50 displays an abbreviation for Arabic, specifying that the Arabic keyboard configuration is the current keyboard configuration that maps another one of the code pages. Figure 5 shows a table listing the languages of some available keyboard configurations. Columns 52A and 52B list the natural languages for which keyboard configurations are available. Columns 54A and 54B list the associated abbreviations (displayed in the pushbuttons 48 and 50) for the natural associated languages.

To select a keyboard language and a code page, a user positions a cursor on a screen of the visual display 22 over one of the pushbuttons 48 or 50 (Figure 4) and selects the keyboard language by clicking the left button of the mouse 20 (step 38 in Figure 3) . To select a keyboard language that maps into the ANSI code page, the user positions the cursor over the left pushbutton 48. In contrast, to select keyboard language that maps into other code pages, the user positions the cursor over the right pushbutton 50 and selects using the left button of the mouse 20. The selection of the code page and language also results in automatic selection of a font for the characters in the selected language. A user may, of course, subsequently change the font to another font.

It should be noted that certain languages may not be paired together on pushbuttons 48 and 50. For instance, the Arabic language may not be paired with languages other than French or English. For instance, if the right pushbutton 50 is currently set for Arabic language and the left pushbutton 48 is currently set for the French language and the user desires to change the language of the left pushbutton 48 to a language other than English or French, an invalid pair would result. In such cases, the user is limited to entering text in the single language displayed on the left pushbutton 48. The right pushbutton 50 becomes dimmed or unavailable. More generally, if the left pushbutton 48 is changed so that it is no longer in the code page of the right pushbutton 50, the right pushbutton 50 becomes dim and changes to the ANSI code page.

In response to the user making a selection for the keyboard language (such as described above), the keyboard handler is informed of the selected code page and selected keyboard configuration (step 40 in Figure 3). The keyboard handler 28 then utilizes the selected keyboard configuration and code page in translating scan codes received from the keyboard 18 (step 42) into character data (i.e., character codes).

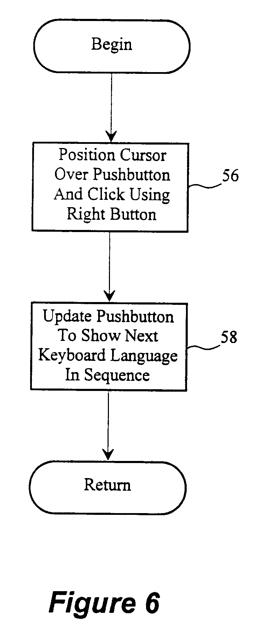

The current choices of keyboard configuration for pushbuttons 48 and 50 may be independently changed using the mouse 20. Figure 6 shows a flow chart of the steps performed to update the current choice of keyboard configuration for either of the pushbuttons 48 and 50. A cursor on the visual display 22 is positioned using the mouse 20 over the pushbutton 48 or 50 having a current keyboard configuration that the user wishes to change. The user then clicks the mouse over the pushbutton 48 or 50 using the right button of the mouse 20 (step 56 in Figure 6). This action advises the operating system 20 that the user wishes to change the current keyboard configuration associated for the pushbutton 48 or 50. The operating system 24 updates the natural language associated with the pushbutton 48 or 50 to show the next keyboard configuration in a predetermined sequence of keyboard configurations (step 58). The operating system 24 provides the predetermined sequence of keyboard configurations. Each time that a pushbutton 48 or 50 is selected using the right button of the mouse 20, the next keyboard configuration in the sequence becomes the current keyboard configuration for the pushbutton 48 or 50. The abbreviation (see columns 54A and 54B in Figure 5) of the language for the current keyboard configuration is then displayed within the pushbutton 48 or 50. A separate sequence of keyboard configuration is stored for each of the pushbuttons 48 and 50.

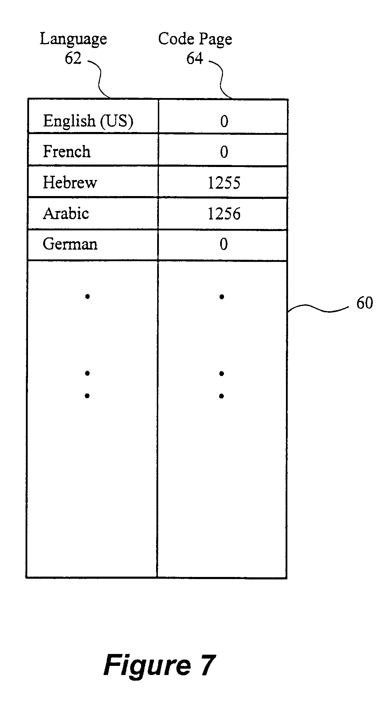

The operating system 24 maintains a table 60 (Figure 7) that defines the sequence of keyboard configurations and specifies the code page associated with a keyboard configuration. For example, as shown in Figure 7, the first keyboard configuration in column 62 of the table 60 is English (United States). The associated entry in column 64 specifies that this keyboard configuration maps into code page 0, which is the ANSI code page. Keyboard configurations for the French language and the German language are also mapped into the ANSI code page (as indicated by the O value in column 64 for these keyboard configurations). Keyboard configurations for Hebrew and Arabic, however, map into different code pages. (Note the values 1255 and 1256 in column 64 for these keyboard configurations in Figure 7.) Thus, the sequence of keyboard layouts for the pushbutton 48 for the ANSI code page is specified by the order of the entries in the table 60 that map to the ANSI code page. The sequence begins with the English (United States) keyboard configuration and then continues with the French keyboard configuration. The next keyboard configuration is the German keyboard configuration. On the other hand, a separate predetermined sequence for pushbutton 50 is provided and is specified by the order in which the keyboard configurations that do not map to the ANSI code page are stored in the table 60. Thus, the second sequence begins with the Hebrew keyboard configuration and then continues with the Arabic keyboard configuration.

It should be appreciated that the sequence of keyboard configurations shown in the table 60 of Figure 7 is merely illustrative. Moreover, it should be appreciated that keyboard configurations may be available for additional languages that differ from those shown in Figure 7.

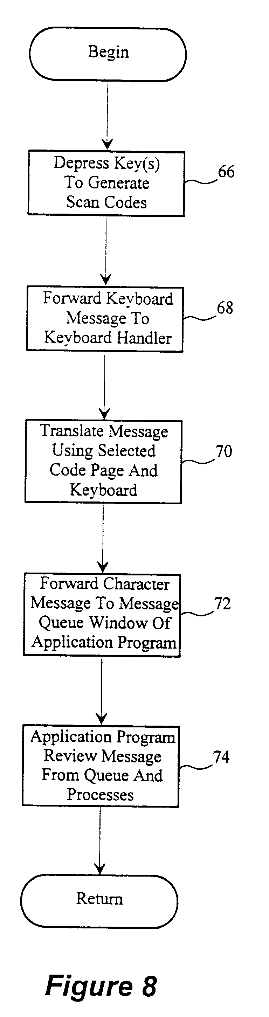

The above discussion has illustrated how pushbuttons 48 and 50 are used to select a code page and keyboard configuration for a program. A fuller understanding of the preferred embodiment of the present invention may be obtained by reviewing how the depression of a key on the keyboard 18 results in the input of a character of a specified language once a keyboard configuration and code page have been selected. Figure 8 is a flow chart illustrating the steps performed by the preferred embodiment of the present invention to determine what character is input when a user depresses the key on the keyboard 18. Initially, the user depresses a key or keys to generate scan code for a character (step 66). It should be appreciated that certain keys will not produce character input when depressed, but these keys are not of particular interest in this discussion. The scan codes are sent in a keyboard message that is forwarded to the keyboard handler 28 (step 68). The keyboard handler 28 knows the keyboard configuration to use and which code page to use in translating the scan codes into character codes. The keyboard handler 28 then translates the keyboard message using the selected code page and keyboard (step 70). The resulting character code is forwarded in a character message to the message cue of the active window of the application program that is executing (step 72). The application program then retrieves the message from the message queue and processes the message (step 74). If the character is to be displayed on the video display, it is displayed using one of the fonts 26 for the code page. In this fashion, the application program becomes aware of the character input.

While the present invention has been described with reference to a preferred embodiment thereof, those skilled in the art will appreciate that various changes in form and detail may be made without departing from the scope of the present invention as defined in the appended claims.

## Claims

1. In a data processing system having a video display, processing means for executing a program on an operating system, a keyboard having keys that generate codes when depressed, memory means for storing a first code page of characters and a second code page of characters, a method comprising the steps of:
(a) during execution of the program on the processing means, using a first code page to interpret codes generated in response to depression of keys of the keyboard as characters from the first code page;
(b) switching the code page used to interpret codes generated in response to depression of keys on the keyboard to a second code page without interrupting execution of the program on the processing means such that codes generated in response to depression of keys of the keyboard are interpreted as characters from the second code page.

2. The method recited in claim 1, further comprising the step of switching the code page used to interpret codes generated in response to depression of keys on the keyboard back to the first code page without interrupting execution of the program on the processing means such that codes generated in response to depression of keys of the keyboard are interpreted as characters from the first code page.

3. The method recited in claim 1, further comprising the step of using the code page used to interpret keystrokes entered on the keyboard to a third code page without interrupting execution of the program on the processing means such that codes generated in response to depression of keys of the keyboard are interpreted as characters from the third code page.

4. The method recited in claim 1, further comprising the step of displaying a user interface element on the video display which facilitates a user choosing the first code page to interpret codes generated in response to depression of keys of the keyboard during execution of the program on the processing means.

5. The method recited in claim 4 wherein the step of displaying the user interface element on the video display which facilitates the user choosing the first code page to interpret codes generated in response to depression of keys of the keyboard further comprises the step of displaying a pushbutton that when activated chooses the first code page to interpret codes generated in response to depression of keys of the keyboard during execution of the program on the processing means.

6. The method recited in claim 1 further comprising the step of displaying a user interface element on the video display which facilitates a user choosing the second code page to interpret codes generated in response to depression of keys of the keyboard.

7. The method recited in Claim 6 wherein the step of displaying the user interface element on the video display which facilitates the user choosing the second code page to interpret codes generated in response to depression of keys of the keyboard further comprises the step of displaying a pushbutton that when activated chooses the second code page to interpret codes generated in response to depression of keys of the keyboard during execution of the program on the processing means and the step of switching the code used to interpret codes generated in response to depression of keys of the keyboard to a second code page is performed in response to activation of the pushbutton.

8. The method recited in claim 1 wherein one of the first code page or the second code page contains at least one character that is unique to a first natural language and also contains at least one character that is unique to a second natural language.

9. The method recited in claim 1 wherein the step of switching the code page used to interpret codes generated in response to depression of keys of the keyboard to a second code page is performed by the operating system.

10. The method recited in claim 1, further comprising the steps of:
using a first font for the first code page;
switching to a second font for use with the second code page in response to the switching of the code page to the second code page.

11. In a data processing system having processing means, memory means and a keyboard that includes keys which produce key codes when depressed, a method comprising the steps of:
(a) storing a first code page of characters in the memory means;
(b) storing a second code page of characters in the memory means;
(c) while running a program on the processing means,
(i) in response to a user depressing a key on the keyboard, generating a key code;
(ii) interpreting the key code as a character in the first code page;
(iii) switching the code page used by the program to the second code page of characters;
(iv) in response to a user depressing another key on the keyboard, generating another key code; and
(v) interpreting the other key code as a character in the second code page.

12. The method recited in claim 11, further comprising the step of switching the code page used by the program back to the first code page of characters.

13. The method recited in claim 12, further comprising the step of switching the code page used by the program back to the first code page of characters.

14. The method recited in claim 11, further comprising the steps of:
using a first font for the first code page;
switching to a second font for use with the second code page in response to the switching of the code page to the second code page.

15. In a data processing system having memory means, a visual display, a keyboard for entering keystrokes and processing means for running an application program on an operating system, a method comprising two steps of
(a) during execution of the application program on the processing means, using a first keyboard configuration for mapping keystrokes entered on the keyboard to character input;
(b) switching the keyboard configuration to a second keyboard configuration for mapping keystrokes entered on the keyboard to character input without interrupting execution of the application program.

16. The method recited in claim 15 wherein the step of using the first keyboard configuration for mapping keystrokes to character input further comprises the step of using the first keyboard configuration for mapping keystrokes to character input of a first natural language.

17. The method recited in claim 16 wherein the step of switching the keyboard configuration to the second keyboard configuration for mapping of keystrokes to character input further comprises the step of using the second keyboard configuration for mapping keystrokes to character input of a second natural language without interrupting execution of the application program.

18. The method recited in claim 15 further comprising the step of switching the keyboard configuration back to the first keyboard configuration for mapping keystrokes entered on the keyboard to character input.

19. The method recited in claim 15 wherein the memory means stores a code page of characters and wherein the first keyboard configuration and the second keyboard configuration map keystrokes entered on the keyboard into characters in the code page.

20. The method recited in claim 15 wherein the memory means stores a first code page of characters and a second code page of characters in the memory means and wherein the first keyboard to characters in the first code page and the second keyboard configuration maps keystrokes entered on the keyboard to characters in the second code page.

21. The method recited in claim 15 further comprising the step of displaying an activatable visual interface on the visual display that when activated causes the keyboard configuration to be switched and performing the step of switching the keyboard configuration in response to activation of the visual interface.

22. The method recited in claim 15 wherein the step of switching the keyboard configuration to the second keyboard configuration is performed by the operating system.

23. In a data processing system having a visual display, memory means, processing means for executing a program and a keyboard having keys, a method comprising the steps of:
(a) storing a code page of characters in the memory means;
(b) storing a keyboard configuration in the memory means for each of a plurality of associated natural languages, each keyboard configuration matching key codes that are produced when one of the keys on the keyboard is depressed with corresponding characters in the code page for the associated natural language;
(c) displaying a visual element or the visual display that allows a user to select one of the keyboard configurations during execution of the program on the processing means; and
(d) in response to selection of a keyboard configuration by the user via the visual element, using the keyboard configuration selected by the user to match key codes with characters in the code page.

24. The method recited in claim 23, further comprising the step of displaying a window generated by the executing program on the video display wherein the visual element that allows the user to select one of the two keyboard configurations is displayed as part of the window.

25. The method recited in claim 24 wherein the step of displaying the visual element on the visual display that allows a user to select one of the keyboard configuration further comprises the step of displaying a pushbutton on the visual display that allows the user to select one of the keyboard configurations.

26. The method recited in claim 25 wherein the steps of displaying a pushbutton on the visual display that allows the user to select one of the keyboard configurations further comprises the step of displaying an identifier of the natural language associated with the selected keyboard on the video display.

27. In a data processing system having memory means, a visual display, a keyboard having keys and a processing means for running a program, a method, comprising the steps of:
(a) storing code pages of characters in the memory means;
(b) for each code page stored in the memory means, storing at least one keyboard configuration that specifies a mapping of key codes, generated in response to depression of keys in the keyboard, to characters in the code page, each keyboard configuration mapping key codes to characters of a different natural language;
(c) during execution of the program on the processing means displaying a first visual element on the video display that may be activated by a user to choose one of the keyboard configurations among those stored for a first code page;
(d) during execution of the program on the processing means, displaying a second visual element on the video display that may be activated by the user to choose one of the keyboard configurations stored for the code pages other than the first code page; and
(e) in response to activation of one of the first or second visual elements selecting one of the keyboard configurations to be used by the program in mapping key codes to characters.

28. The method recited in claim 27 further comprising the step of activating the same visual element that was activated in step (e) to select a different keyboard configuration to be used by the program in mapping the key codes to characters.

29. The method recited in claim 27 further comprising the step of activating a different one of the visual elements than the visual element that was activated in step (e) to select a different keyboard configuration to be used by the program in mapping the key codes to characters.
